# EUROPEAN PATENT APPLICATION

(11) **EP 4 131 011 A1**
(43) Date of publication of application: **08.02.2023**
(21) Application number: 22183000.3
(22) Date of filing: 05.07.2022
(51) Int. Cl.: G06F 11/36, G06N 3/00

(54) **METHODS AND APPARATUS TO GENERATE A SURROGATE MODEL BASED ON TRACES FROM A COMPUTING UNIT**

(30) Priority: 05.08.2021 US 202163230018 P; 22.12.2021 US 202117559755
(71) Applicant: INTEL Corporation, Santa Clara, CA 95054 (US)
(72) Inventor: Turek, Javier Sebastian, Beaverton, 97006 (US); Capota, Mihai, Portland, 97201 (US); MUKHERJEE, Parijat, Santa Clara, 95054 (US); Antonello, Richard, Santa Clara, 95054 (US)
(74) Representative: Goddar, Heinz J.

(57) **Abstract**

Methods, apparatus, systems, and articles of manufacture to generate a surrogate model based on traces from a computing unit are disclosed. An example apparatus includes an interface; instructions; and processor circuitry to execute the instructions to generate sequences of events for a platform; train an artificial intelligence (AI)-based model using the sequences of events; generate a surrogate model based on the trained AIbased model; and perform unit testing using the surrogate model.

## Description

### RELATED APPLICATION

This patent claims the benefit of U.S. Provisional Patent Application No. 63/230,018, which was filed on August 5, 2021. U.S. Provisional Patent Application No. 63/230,018 is hereby incorporated herein by reference in its entirety. Priority to U.S. Provisional Patent Application No. 63/230,018 is hereby claimed.

### FIELD OF THE DISCLOSURE

This disclosure relates generally to computing systems and, more particularly, to methods and apparatus to generate a surrogate model based on traces from a computing unit.

### BACKGROUND

In compute systems (also referred to as computing systems, processor system, etc.), development of components requires validation to ensure that the compute system will operate when implemented. For example, computing systems may include hardware, firmware, basic input output system (BIOS), drivers, etc. Such components may be instantiated and/or implemented by software. In some example virtualization software may be used to virtualize a hardware platform during development, testing, and/or validation so that software can be tested on hardware before the platform is complete. In this manner, hardware and software can be validated during a validation process.

### BRIEF DESCRIPTION OF THE DRAWINGS

FIG. 1 illustrates an example compute device to generate surrogate models for unit testing.
FIG. 2 is a block diagram of an example implementation of an artificial intelligence model of FIG. 1.
FIG. 3 is a block diagram of an example implementation of surrogate model generation circuitry of FIG. 1.
FIGS. 4-5 are flowcharts representative of example machine readable instructions that may be executed by example processor circuitry to implement the compute device, the artificial intelligence model, and/or the surrogate model generation circuitry of FIGS. 1, 2, and/or 3.
FIG. 6 illustrates and example surrogate model and an example graphical representation of the surrogate model.
FIG. 7 is a block diagram of an example processor platform including processor circuitry structured to execute the example machine readable instructions of FIGS. 4-5 to implement the example compute device of FIG. 1.
FIG. 8 is a block diagram of an example implementation of the processor circuitry of FIG. 7.
FIG. 9 is a block diagram of another example implementation of the processor circuitry of FIG. 7.
FIG. 10 is a block diagram of an example software distribution platform (e.g., one or more servers) to distribute software (e.g., software corresponding to the example machine readable instructions of FIGS. 4 and/or 5) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

### DETAILED DESCRIPTION

The figures are not to scale. Instead, the thickness of the layers or regions may be enlarged in the drawings. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real world imperfections. As used herein "substantially real time" refers to occurrence in a near instantaneous manner recognizing there may be real world delays for computing time, transmission, etc. Thus, unless otherwise specified, "substantially real time" refers to real time +/- 1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

Platform simulators (e.g., such as Simics^{®}) may be used to mimic the behavior of registers, memory maps, and other software-facing hardware assets to provide a virtual platform that software developers can used to develop and validate individual BIOS components, firmware components, driver components, etc. Such platform simulators may require multiple hardware, firmware, BIOS, operating system (OS), and driver components to be integrated before unit testing (e.g., testing of software on a platform) can occur. The integration of such components can take weeks to develop unless manually written test-harnesses are also developed. Manual test-harnesses is a collection of software and/or test data configured to test a program unit by running it under varying conditions and monitoring its behavior and outputs. However, development of manual-test harnesses is time-consuming, error-prone, and requires skilled developers that understand the intricacies of the hardware interfaces and internal workings of the underlying hardware. Additionally, changes in the platform requires reconfiguration of test-harnesses.

Examples disclosed herein replace test harnesses with a surrogate model that leverages real platforms and/or virtual platforms developed by a platform simulator. Such surrogate models can be implemented for unit testing. A surrogate model (e.g., also referred to as a metamodel, an emulator, etc.) is an analytical model that mimics the input/output behavior of a complex system. In some examples, techniques (e.g., concolic testing, fuzzing, etc.) can be applied to the disclosed surrogate models trained under varying system configuration and/or execution scenarios to maximize and/or improve unit-testing coverage, discover edge cases that are not possible to detect with conventional techniques, etc. Additionally, surrogate models provide explainability (e.g., a virtual representation) of the hardware platform. In this manner, developers can use the virtual representation of the surrogate model to debug issues with BIOS, firmware, driver component, the platform simulator itself, etc. Accordingly, examples disclosed herein improve software quality via increased coverage, elimination of redundant work, and reduction of product turn-around-time by enabling early debug discovery.

Examples disclosed herein generate the surrogate model based on an AI-based model that has been trained using a plurality of valid traces observed on the platform. The AI-based model corresponds to the behavior of multiple dependencies of the platform. A valid trace is a sequence of events that can occur and/or has occurred on a hardware platform. A trace is captured data that illustrates how components of the platform are operating, executing, and/or performing. Accordingly, examples disclosed herein generate traces from an input platform, generate an AI-based model to predict valid traces of the platform based on the generated traces, and generate a surrogate model corresponding to the trained AI-based model. The surrogate model replaces test harnesses and can replace a full simulation of a platform with high fidelity.

In addition to firmware-based testing and visual debugging, examples disclosed herein can be used to generate surrogate models from produced silicon and apply the surrogate models to post-silicon validation. Accordingly, examples disclosed herein can use the surrogate model to plug-in a closer version of a set of components back into the simulation to detect the origin of defects. In some examples, surrogate models may be generated based on hardware description language (HDL) simulations. In this manner, example disclosed herein can use the surrogate model to auto-generate bus function models to unit-test hardware components and debug communication fabric and protocol errors.

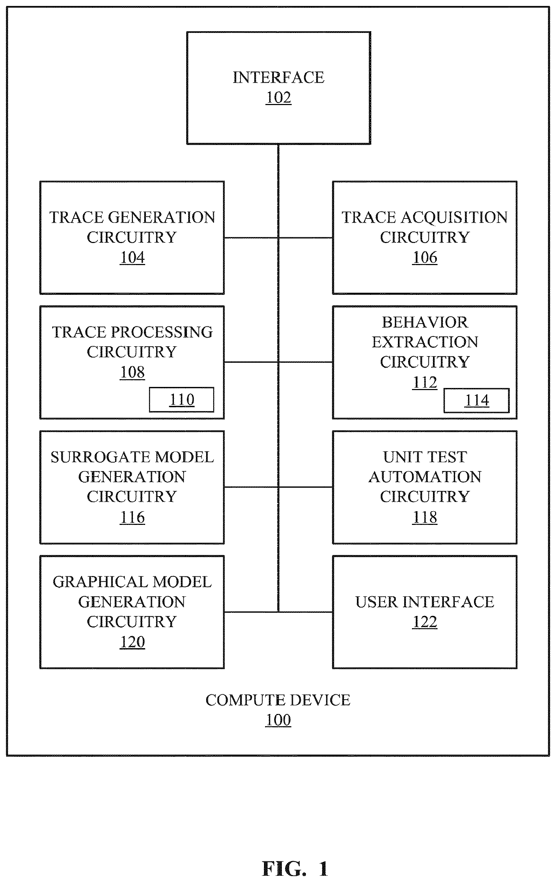

FIG. 1 is a block diagram of an example compute device 100 described in conjunction with examples disclosed herein. The example compute device 100 may be a server, a computer, a mobile device, a tablet, a phone, and/or any other type of compute device. The compute device 100 of FIG. 1 may be instantiated (e.g., creating an instance of, bring into being for any length of time, materialize, implement, etc.) by processor circuitry such as a central processing unit executing instructions. Additionally or alternatively, the compute device 100 may be instantiated (e.g., creating an instance of, bring into being for any length of time, materialize, implement, etc.) by an ASIC or an FPGA structured to perform operations corresponding to the instructions. It should be understood that some or all of the circuitry of FIG. 1 may, thus, be instantiated at the same or different times. Some or all of the circuitry may be instantiated, for example, in one or more threads executing concurrently on hardware and/or in series on hardware. Moreover, in some examples, some or all of the circuitry of FIG. 1 may be implemented by one or more virtual machines and/or containers executing on the microprocessor. The example compute device 100 includes an example interface 102, example trace generation circuitry 104, example trace acquisition circuitry 106, example trace processing circuitry 108, an example filter 110, example behavior extraction circuitry 112, an example AI-based model 114, example surrogate model generation circuitry 116, example unit test automation circuitry 118, example graphical model generation circuitry 120, and an example user interface 122.

The example interface 102 of FIG. 1 obtains platform information corresponding to the structure of hardware components of a platform. The platform information may correspond to a real platform or a virtual platform (e.g., from a platform simulator). The example interface 102 may obtain the platform information from a wired or wireless communication. In some examples, the interface 102 may provide an generated surrogate model, code corresponding to a generated surrogate model, and/or a graphical representation of a surrogate model to another device or component via a wired or wireless communication. In some examples, the interface 102 may obtain software to test a generated surrogate model from one or more devices and/or components via a wired or wireless communication.

The example trace generation circuitry 104 of FIG. 1 generates traces using the platform information. For example, the trace generation circuitry 104 may execute and/or instantiate instructions and/or functions on the obtained platform that results in the generation of valid traces for the platform. The valid traces corresponds to how the components of the platform are operating, executing, and/or performing in response to the instructions and/or functions. Although examples disclosed herein described generating traces from a virtual platform, examples disclosed herein can be applied to any source of execution trace data (e.g., hardware description language (HDL) simulators, running on silicon after manufacture and/or integrated into a real platform, etc.). As further described below, the trace generation circuitry 104 may obtain instructions on particular traces to generate from the trace acquisition circuitry 106. In such examples, the trace generation circuitry 104 will focus the trace generation based on the instructions (e.g., by generating traces that correspond to the sections of interest of the platform). The example trace generation circuitry 104 outputs the generated traces to the example behavior extraction circuitry 112 (e.g., directly or via the trace acquisition circuitry 106 and/or the trace processing circuitry 108).

The example trace acquisition circuitry 106 of FIG. 1 instructs the example trace generation circuitry 104 to generate traces corresponding to particular sections of the platform based on how the surrogate model will be used. In this manner, the trace acquisition circuitry 106 can ensure that relevant traces are generated in a precise manner such that no processing of generated traces are needed (e.g., to filter out irrelevant traces). In some examples, the trace acquisition circuitry 106 can determine which sections of the platform are of interest based on information obtained from the interface 102 and/or the user interface 122. For example, if the interface 102 and/or user interface 122 transmit information corresponding to which components of the platform are to be replaced by the surrogate model, the trace acquisition circuitry 106 can reduce tracing overhead by limiting the active tracing to information corresponding to the components. The trace acquisition circuitry 106 can ensure that traces are generated for all possible system configuration and execution scenarios to maximize and/or improve coverage obtained by the unit test automation circuitry 118.

The example trace processing circuitry 108 of FIG. 1 processes filters out irrelevant traces. Filtering may occur when the trace acquisition circuitry 106 was not implemented to ensure that the trace generation circuitry generated focused and/or relevant traces, when binary files representing the components are given, when not all callbacks are available, etc. The example trace processing circuitry 108 standardizes the traces based on user input and/or information corresponding to the components to be replaced by the surrogate model (e.g., via the user interface 122). With the user input and/or information, the filter 110 of the trace processing circuitry 108 removes, discards, and/or filters out irrelevant trace information. The irrelevant trace information may include internal communications between two components that are inside a set of components to be replaced with the surrogate model. After the irrelevant information is removed, the example filter 110 performs trace slicing for traces that happen concurrently. Trace slicing removes duplicate trace information. After the trace slicing is performed, the example trace processing circuitry 108 analyzes the remaining traces and prepares the traces for the example behavior extraction circuitry 112. For example, the trace processing circuitry 108 may convert the information in the traces to a format that can be used to train an AI-based model. In such an example, "<END>" may be added to all traces. The example trace processing circuitry 108 can gather the events in a table and convert the events to identifiers (e.g., integers). Additionally, if the CPU sends a message to a PCI card, the example trace processing circuitry 108 can use the message identifier as part of the event information.

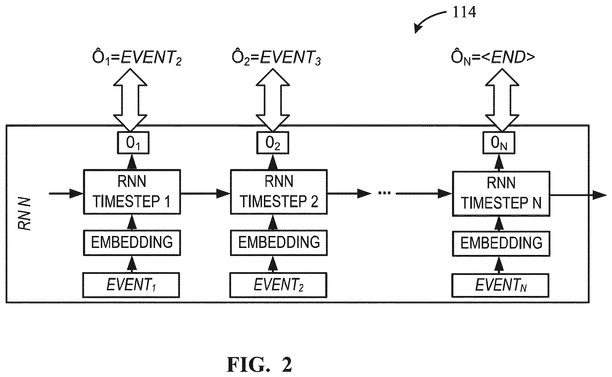

The example behavior extraction circuitry 112 of FIG. 1 generates an intermediate model that learns the behavior of the platform based on the traces. For example, the behavior extraction circuitry 112 trains the AI-based model 114 using the generated traces. The example AI-based model 114 is an unsupervised (e.g., self-learning) AI-based model (e.g., recurrent neural network, a neural network, a deep learning model, a machine learning model, etc.) that learns (e.g., using the generated traces) what the next event of a trace will be based on the current event. For example, a neural network (e.g., a long short-term memory, a transformer network, etc.) may learn to predict a next event in a sequence given the previous events as an input. Accordingly, after training, the AI-based model 114 can identify valid traces and/or invalid traces. An example of the AI-based model 114 is further described below in conjunction with FIG. 2. The example behavior extraction circuitry 112 outputs the trained AI-based model to the example surrogate model generation circuitry 116.

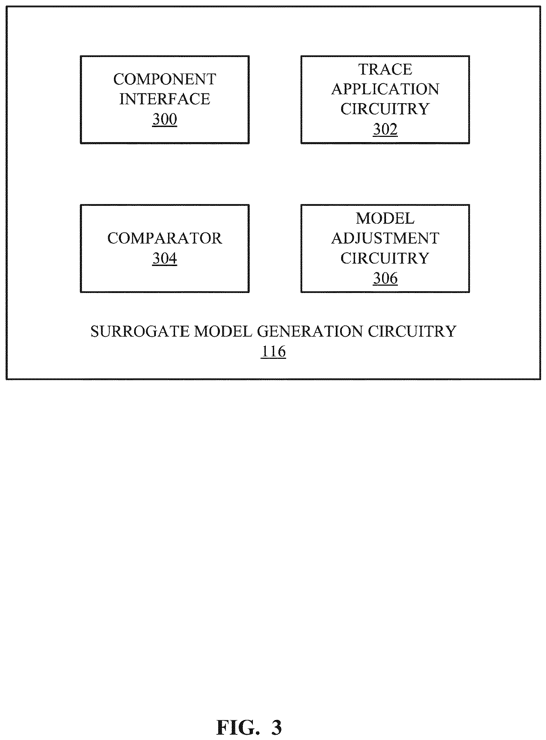

The example surrogate model generation circuitry 116 of FIG. 1 generates a surrogate model corresponding to the trained AI-based model 114 from the example behavior extraction circuitry 112. The example surrogate model generation circuitry 116 generates the surrogate model as a generalized representation from the behavior learned from the AI-based model 114. The generalized representation generalizes the traces and can run for long simulations. In some examples, the surrogate model is independent from the AI-based model 114 at runtime. The surrogate model generation circuitry 116 can generate the surrogate model to be a final state machine or automaton. An automaton includes a set of states and a function that describe the possible transitions from one state to another, given a specific input (e.g., a possible event). The states may include an initial state (e.g., a starting state) and one or more acceptor states (e.g., ending states that can accept a sequence of events in a valid trace. In some examples, the surrogate model generation circuitry 116 can generate a surrogate model to be a push-down automaton or other generalized representation. As described above, the surrogate model replaces the hardware platform and can be used for unit testing and/or to generate a visual (e.g., graphical) representation of one or more components of the platform. The example surrogate model generation circuitry 116 is further described below in conjunction with FIG. 3.

The example unit test automation circuitry 118 of FIG. 1 converts the surrogate model into a language interface (e.g., code and/or a program written in one or more languages). The unit test automation circuitry 118 may include language templates to generate an output suitable for usage in uniting testing based on the corresponding stored template. For example, if the surrogate model is a state machine and the unit tests are written in C (e.g., commonly used for BIOS, firmware, and/or driver development), the unit test automation circuitry 118 produces a C language interface to the state machine. Additionally or alternatively, the unit test automation circuitry 118 can develop a program in C#, C++, python, and/or any other language. The unit test automation circuitry 118 creates the interface by instantiating a language-specific template with the surrogate model specification. In this manner, the unit test automation circuitry 118 can target languages of interest and developers can use the language interface to interact with a surrogate model (e.g., to pass inputs, observe state changes, and observe outputs).

Additionally or alternatively, the unit test automation circuitry 118 of FIG. 1 executes unit tests using the surrogate model to find edge-cases under which a unit test fails. In some examples, the same surrogate model may return different responses based on the start condition (e.g., platform/system-configurations) and the edges followed to arrive at the current state (e.g., the execution context). To maximize coverage of the functions under test, the example unit test automation circuitry 118 ensures the start condition and edge leading to the start of the function is covered. For example, the unit test automation circuitry 118 can repurpose existing software coverage maximizing/improving techniques (e.g., concolic testing, fuzzing, etc.).

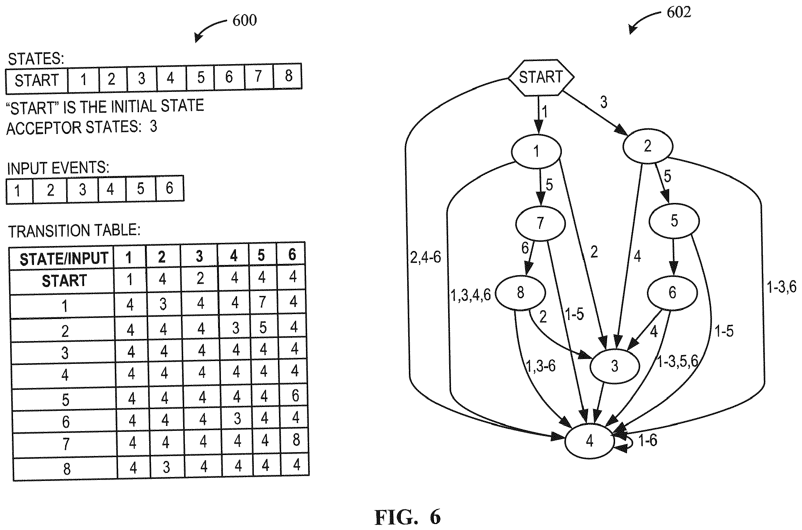

The example graphical model generation circuitry 120 of FIG. 1 obtains a generated surrogate model and generates a visual and/or graphical representation of the surrogate model (e.g., a graph). In some examples, the graphical representation can serve as a representation of the design of one or more components in the platform (e.g., virtual or actual) that the surrogate model corresponds to. An example of a visual representation of the surrogate model is further described in conjunction with FIG. 6.

The example user interface 122 of FIG. 1 obtains information from a user of the computing device 100. For example, the user may provide details related to one or more components of the platform to be points of interest in generating a surrogate model. Additionally, the example user interface 122 may display results to a user (e.g., unit-test results, the graphical model, a table, code, and/or data corresponding to the surrogate model, etc.).

FIG. 2 is a block diagram of an example implementation of the AI-based model 114 of FIG. 1. The example AI-based model 110 of FIG. 2 is a recurrent neural network (RNN). Alternatively, other types of AI-based models may be used (e.g., a long short-term memory, a transformer network, a memory augment model, etc.). The example AI-based model 114 obtains an input corresponding to a sequence, such that each event in a trace is an element in a sequence. The AI-based model 114 may be trained as a self-supervised (e.g., unsupervised) model to learn to predict the event at position t+1 in the sequence given the events from position 1 to t as an input. The sequence includes an "<END>" event that symbolizes the end of the trace. The final trained AI-based model 114 is an intermediate model representation that is output to the surrogate model generation circuitry 116 of FIG. 1. The output ot of the AI-based model 114 is matched to the next event in the trace, eventₜ₊₁. The last predicted event at t = N is the added <END> event. In some examples, the AI-based model 114 maintains a context given by the recurrent (e.g., horizontal) connections across timestamps. The embedding events transform the types of events and their information into vectors that can be processed by the AI-based model 114.

FIG. 3 is a block diagram of an example implementation of the surrogate model generation circuitry 116 of FIG. 1. The surrogate model generation circuitry 116 of FIG. 3 may be instantiated (e.g., creating an instance of, bring into being for any length of time, materialize, implement, etc.) by processor circuitry such as a central processing unit executing instructions. Additionally or alternatively, the surrogate model generation circuitry 116 of FIG. 3 may be instantiated (e.g., creating an instance of, bring into being for any length of time, materialize, implement, etc.) by an ASIC or an FPGA structured to perform operations corresponding to the instructions. Accordingly, some or all of the circuitry of FIG. 3 may be instantiated at the same or different times. Some or all of the circuitry may be instantiated, for example, in one or more threads executing concurrently on hardware and/or in series on hardware. Moreover, in some examples, some or all of the circuitry of FIG. 3 may be implemented by one or more virtual machines and/or containers executing on the microprocessor. The example surrogate model generation circuitry 116 includes an example component interface 300, example trace application circuitry 302, an example comparator 304, and example adjustment circuitry 305. Although the example of FIG. 3 includes an example implementation of the surrogate model generation circuitry 116, there may be other ways to generate a surrogate model based on an AI-based model with different circuitry.

The example component interface 300 of FIG. 3 obtains the trained AI-based model 114 from the example trace processing circuitry 108. Additionally, the example component interface 300 outputs a generated surrogate model to the unit test automation circuitry 118 (e.g., to unit-test using the surrogate model) and/or the example graphical model generation circuitry 120 (e.g., to generate a graphical representation of the surrogate model).

The example trace application circuitry 302 of FIG. 3 generates traces (e.g., random traces and/or guided traces) to apply to both an untrained surrogate model and the trained AI-based model. A random trace is a trace that is randomly generated by the trace application circuitry 302. A guided trace may be a preselected and/or prestored trace and/or a user generated/selected trace. After the traces are generated, the example trace application circuitry 302 applies the generated traces to both the AI-based model and a surrogate model (e.g., an untrained surrogate model under training and/or being generated). As further described above, the AI-based model has been trained (e.g., based on the valid traces used to train the AI-based model 114) to output a determination as to whether an input trace is valid and/or not valid. In some examples, the trace application circuitry 302 uses the AI-based model to accept a trace (e.g., categorizes a trace as valid) if the AI-based model can predict the next event in the race to be "<END>" with at least a probability bigger than a predefined threshold T. Otherwise, the trace application circuitry 302 rejects the trace (e.g., categorizes as invalid). Additionally, the surrogate model likewise determines whether an input trace is valid or not (e.g., the surrogate model may be initialized to determine that all traces are valid, all traces are invalided, and/or all traces are randomly valid and/or invalid). The surrogate model may accept a trace (e.g., categorize as valid) depending on the type of surrogate model used. For example, if the surrogate model is implemented as a deterministic finite automaton (DFA), the surrogate model will accept a trace that ends in an acceptor state. If the surrogate model is implemented as a push-down automata, the surrogate model will accept a trace that ends in an acceptor state or an empty stack. Push-down automata is a finite automata with a stack which helps pushdown automata to recognize context free languages. As further described below, the surrogate model is adjusted based on a comparison of the results (e.g., valid or invalid) of the AI-based model and the surrogate model and additional traces are applied to both models until training and/or generation of the final surrogate model is complete.

The example comparator 304 of FIG. 3 compares the results (e.g., outputs) of the AI-based model and the surrogate model to see if the outputs match. For example, the comparator 304 may indicate the outputs match when the AI-based model outputs a valid indication for a trace and the surrogate model also indicates a valid indication for a trace or when the AI-based model outputs an invalid indication for a trace and the surrogate model also indicates an invalid indication for a trace. The example comparator 304 outputs an indication that the outputs do not match (e.g., also referred to as a counterexample) when the output of the AI-based model is different than the output of the surrogate model (e.g., one valid output and one invalid output).

The example model adjustment circuitry 306 of FIG. 3 adjusts the surrogate model based on the results of the comparison. The model adjustment circuitry 306 may initiate a surrogate model. In some examples, the model adjustment circuitry 306 can initialize the surrogate model as an empty model that does not identify any trace. After a trace is applied to both the surrogate model and the AI-based model, if both outputs correspond to a valid trace, the example model adjustment circuitry 306 does not update the surrogate model (e.g., because the outputs match) and the model adjustment circuitry 306 determines whether to perform a subsequent iteration. In some examples, the model adjustment circuitry 306 may determine whether to perform a subsequent iterations based on the number of iterations already performed, the number of matches during iterations, the number of counterexamples, the ratio of matches, the ratio of counterexamples, the number of iterations performed since the last counterexample was found, etc. If the example model adjustment circuitry 306 determines that the outputs correspond to a counterexample, the model adjustment circuitry 306 adjusts the surrogate model to match the output of the AI-based model for the input trace so that the surrogate model will properly accept or reject the trace (e.g., to match the AI-based model). In some examples, if the surrogate model is a DFA model, the model adjustment circuitry 306 may use a L^{∗}method to update the surrogate model. The L^{∗} method uses membership queries to determine if a trace is valid to maintain a set of states and their differentiation. In this manner, a counter example (e.g., a trace that is incorrectly classified by a surrogate model) adds information of missing states and their transitions.

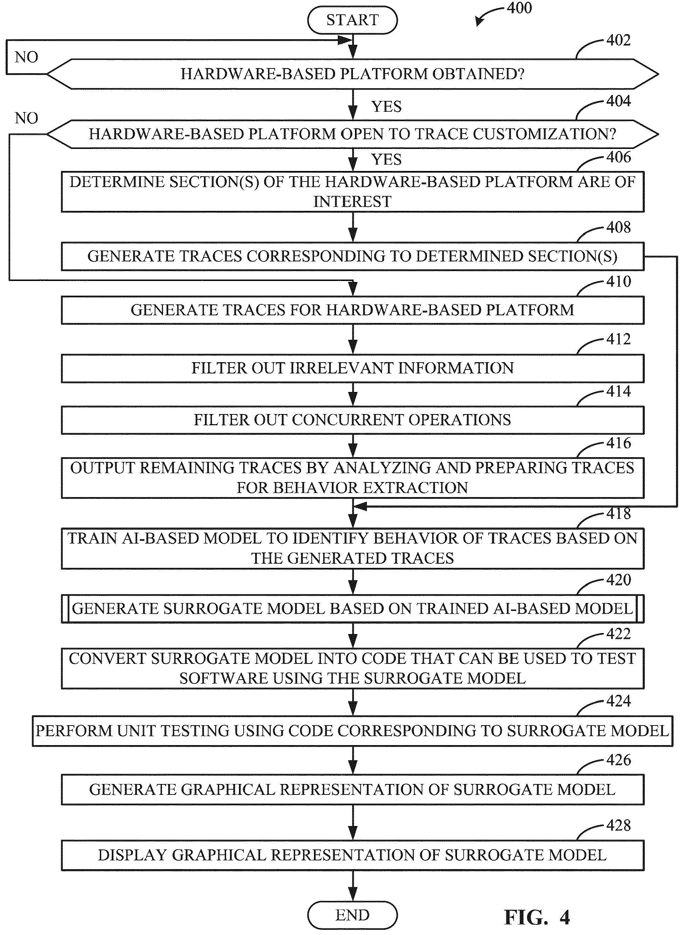

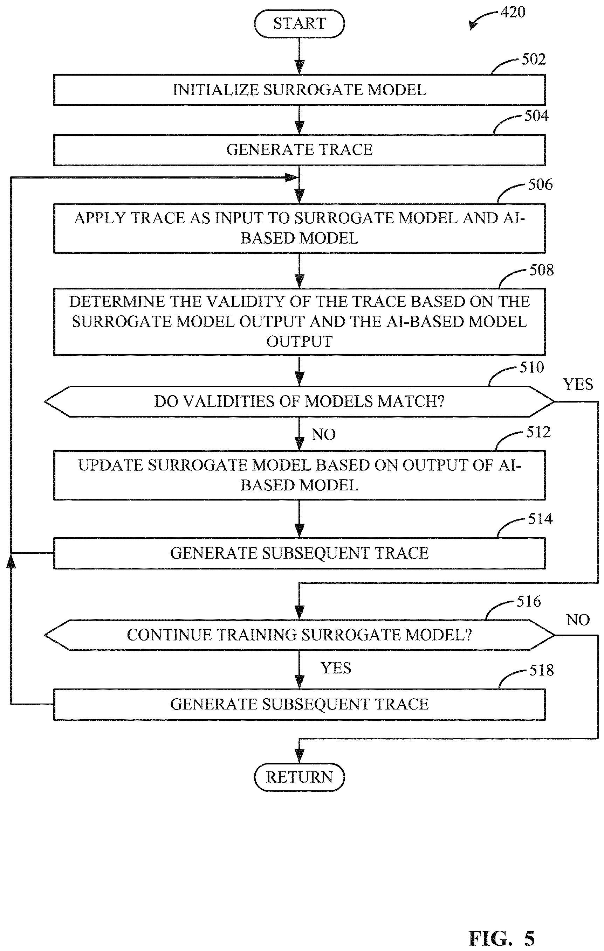

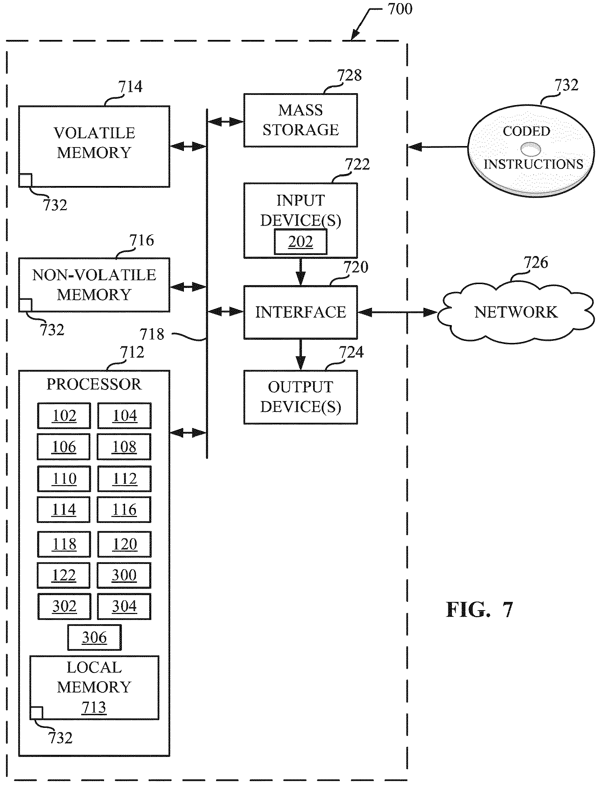

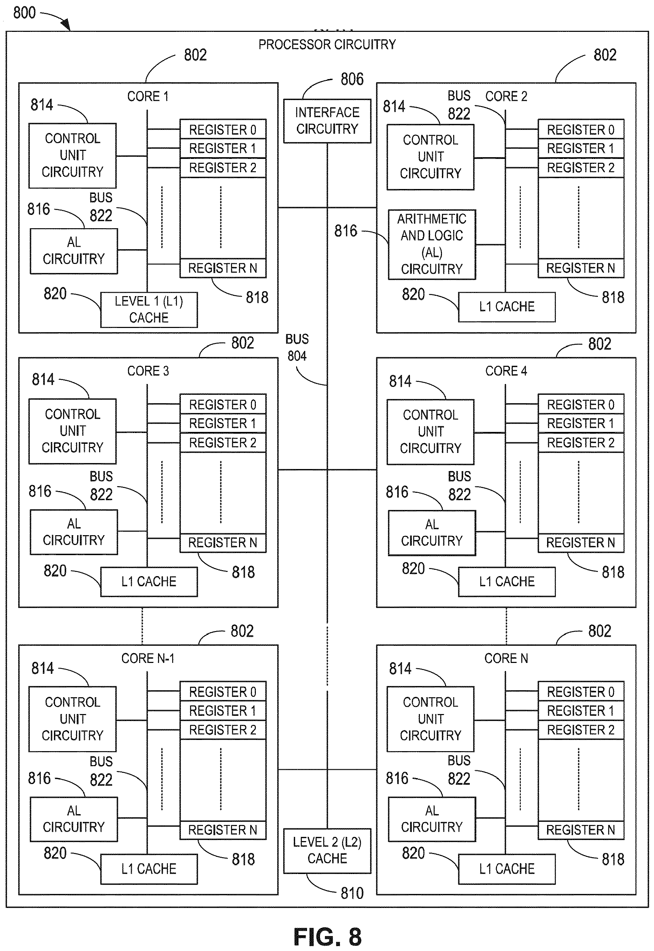

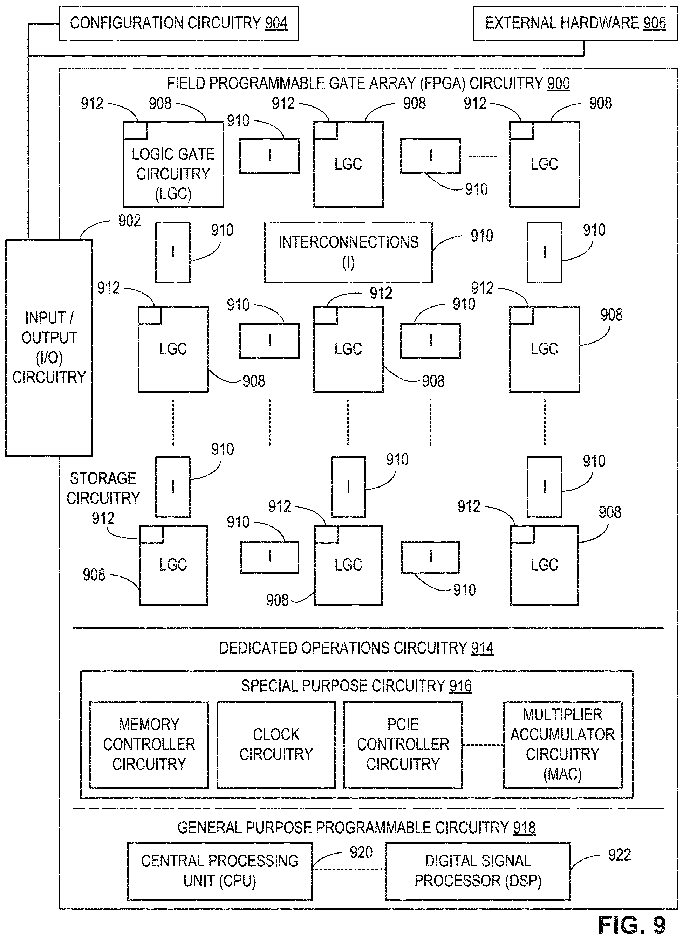

In some examples, the compute device 100 includes means for generating, means for training, means for performing, means for determining, means for filtering, and means for displaying. For example, the means for generating may be implemented by the trace generation circuitry 104, the surrogate model generation circuitry 116, and/or graphical model generation circuitry 120, the means for training may be implemented by the behavior extraction circuitry, and the means for performing may be implemented by the unit test automation circuitry 118, the means for determining may be implemented by trace acquisition circuitry 106, and the means for filtering may be implemented by the trace processing circuitry 108 and/or the filter 110, and the means for displaying may be implemented by the user interface 122. In some examples, the example interface 102, the example trace generation circuitry 104, the example trace acquisition circuitry 106, the example trace processing circuitry 108, the example filter 110, the example behavior extraction circuitry 112, the example AI-based model 114, the example surrogate model generation circuitry 116, the example unit test automation circuitry 118, the example graphical model generation circuitry 120, and the example user interface 122 may be instantiated by processor circuitry such as the example processor circuitry 712 of FIG. 7. For instance, the example interface 102, the example trace generation circuitry 104, the example trace acquisition circuitry 106, the example trace processing circuitry 108, the example filter 110, the example behavior extraction circuitry 112, the example AI-based model 114, the example surrogate model generation circuitry 116, the example unit test automation circuitry 118, the example graphical model generation circuitry 120, and the example user interface 122 may be instantiated by the example general purpose processor circuitry 800 of FIG. 8 executing machine executable instructions such as that implemented by at least the blocks of FIGS. 4 and/or 5. In some examples, the example interface 102, the example trace generation circuitry 104, the example trace acquisition circuitry 106, the example trace processing circuitry 108, the example filter 110, the example behavior extraction circuitry 112, the example AI-based model 114, the example surrogate model generation circuitry 116, the example unit test automation circuitry 118, the example graphical model generation circuitry 120, and the example user interface 122 may be instantiated by hardware logic circuitry, which may be implemented by an ASIC or the FPGA circuitry 900 of FIG. 9 structured to perform operations corresponding to the machine readable instructions. Additionally or alternatively, the example interface 102, the example trace generation circuitry 104, the example trace acquisition circuitry 106, the example trace processing circuitry 108, the example filter 110, the example behavior extraction circuitry 112, the example AI-based model 114, the example surrogate model generation circuitry 116, the example unit test automation circuitry 118, the example graphical model generation circuitry 120, and the example user interface 122 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the surrogate model generation circuitry 116 includes means for initializing, means for generating, means for applying, means for comparing means for determining, and means for adjusting. For example, the means for initiating may be implemented by the model adjustment circuitry 306, the means for generating may be implemented by the trace application circuitry 302, and the means for applying may be implemented by the unit trace application circuitry 302, the means for comparing may be implemented by comparator 304, and the means for determining may be implemented by trace application circuitry 302, and the means for adjusting may be implemented by the model adjustment circuitry 306. In some examples, the example component interface 300, the example trace application circuitry 302, the example comparator 304, and/or the example model adjustment circuitry 306 may be instantiated by processor circuitry such as the example processor circuitry 712 of FIG. 7. For instance, the example component interface 300, the example trace application circuitry 302, the example comparator 304, and/or the example model adjustment circuitry 306 may be instantiated by the example general purpose processor circuitry 800 of FIG. 8 executing machine executable instructions such as that implemented by at least blocks of FIGS. 4 and/or 5. In some examples, the example component interface 300, the example trace application circuitry 302, the example comparator 304, and/or the example model adjustment circuitry 306 may be instantiated by hardware logic circuitry, which may be implemented by an ASIC or the FPGA circuitry 900 of FIG. 9 structured to perform operations corresponding to the machine readable instructions. Additionally or alternatively, the example component interface 300, the example trace application circuitry 302, the example comparator 304, and/or the example model adjustment circuitry 306 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

While an example manner of implementing the compute device 100 and/or the surrogate model generation circuitry 116 of FIGS. 1 and/or 3 is illustrated in FIGS. 1 and/or 3, one or more of the elements, processes, and/or devices illustrated in FIGS. 1 and/or 3 may be combined, divided, re-arranged, omitted, eliminated, and/or implemented in any other way. Further, the example interface 102, the example trace generation circuitry 104, the example trace acquisition circuitry 106, the example trace processing circuitry 108, the example filter 110, the example behavior extraction circuitry 112, the example AI-based model 114, the example surrogate model generation circuitry 116, the example unit test automation circuitry 118, the example graphical model generation circuitry 120, the example user interface 200, the example component interface 300, the example trace application circuitry 302, the example comparator 304, and the example model adjustment circuitry 306, and/or, more generally, the compute device 100 and/or the surrogate model generation circuitry 116 of FIGS. 1 and/or 3, may be implemented by hardware, software, firmware, and/or any combination of hardware, software, and/or firmware. Thus, for example, any of the example interface 102, the example trace generation circuitry 104, the example trace acquisition circuitry 106, the example trace processing circuitry 108, the example filter 110, the example behavior extraction circuitry 112, the example AI-based model 114, the example surrogate model generation circuitry 116, the example unit test automation circuitry 118, the example graphical model generation circuitry 120, the example user interface 200, the example component interface 300, the example trace application circuitry 302, the example comparator 304, and the example model adjustment circuitry 306, and/or, more generally, the compute device 100 and/or the surrogate model generation circuitry 116 of FIGS. 1 and/or 3, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). When reading any of the apparatus or system claims of this patent to cover a purely software and/or firmware implementation, at least one of the compute model 100 and/or the surrogate model generation circuitry 116 of FIGS. 1 and/or 3 is/are hereby expressly defined to include a non-transitory computer readable storage device or storage disk such as a memory, a digital versatile disk (DVD), a compact disk (CD), a Blu-ray disk, etc., including the software and/or firmware. Further still, the compute device 100 and/or the surrogate model generation circuitry 116 of FIGS. 1 and/or 3 may include one or more elements, processes, and/or devices in addition to, or instead of, those illustrated in FIGS. 1 and/or 3, and/or may include more than one of any or all of the illustrated elements, processes, and devices.

Flowcharts representative of example hardware logic circuitry, machine readable instructions, hardware implemented state machines, and/or any combination thereof for implementing the compute device 100 and/or the surrogate model generation circuitry 116 are shown in FIGS. 4 and/or 5. The machine readable instructions may be one or more executable programs or portion(s) of an executable program for execution by processor circuitry, such as the processor circuitry 712 shown in the example processor platform 700 discussed below in connection with FIG. 7 and/or the example processor circuitry discussed below in connection with FIG. 7. The program may be embodied in software stored on one or more non-transitory computer readable storage media such as a CD, a floppy disk, a hard disk drive (HDD), a DVD, a Blu-ray disk, a volatile memory (e.g., Random Access Memory (RAM) of any type, etc.), or a non-volatile memory (e.g., FLASH memory, an HDD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowchart illustrated in FIG. 4, many other methods of implementing the compute device 100 and/or the surrogate model generation circuitry 116 of FIGS. 1-2 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or compute devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a compute device and/or other machine. For example, the machine readable instructions may be stored in multiple parts, which are individually compressed, encrypted, and/or stored on separate compute devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular compute device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4 and/or 5 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 4 is a flowchart representative of example machine readable instructions and/or example operations 400 that may be executed and/or instantiated by processor circuitry (e.g., the compute device 100 of FIG. 1) to generate a surrogate model corresponding to a platform. The instructions begin at block 402 when the example trace generation circuitry 104 determines if a hardware-based platform has been obtained via the interface 102. As described above, the platform may be a real platform or a virtual platform. If the interface 102 has not obtained a hardware-based platform (block 402: NO), control returns to block 402 until a platform has been received. If the interface 102 has obtained a hardware-based platform (block 402: YES), the example trace acquisition circuitry 106 determines if the hardware-based platform is open to trace customization (block 404). Trace customization corresponds to when the user and/or the compute system can select which traces to generate based on one or more components of interest.

If the example trace acquisition circuitry 106 determines that the hardware-based platform is not open to trace customization (block 404: NO), control continues to block 410, as further described below. If the example trace acquisition circuitry 106 determines that the hardware-based platform is open to trace customization (block 404: YES), the example trace acquisition circuitry 106 determines the section(s) of the hardware-based platform that are of interest (block 406). For example, the trace acquisition circuitry 106 can determine the section(s) of the platform based on user input (e.g., obtained via the user interface 122) and/or based on the purpose of the surrogate model. At block 408, the example trace generation circuitry 104 generates valid traces (e.g., sequences of events) corresponding to the determined section(s) of the obtained hard-ware based platform. After block 408, control continues to block 418, as further described below.

At block 410, the example trace generation circuitry 104 generates valid traces for the hardware based platform. Because the traces may not be focused on section(s) of interest, the traces may will need to be processed (e.g., to filter out irrelevant and/or duplicative traces). At block 412, the example filter 110 of the trace processing circuitry 108 filters out irrelevant information. As described above, the irrelevant information may include communication between components that are not part of the process of what is being analyzed, and/or communications related to a component within a component. At block 414, the example filter 110 of the trace processing circuitry 108 filters out concurrent operations. At block 416, the example trace processing circuitry 108 outputs the remaining traces by analyzing and preparing traces for behavior extraction. As described above, the analysis and preparing of traces may include converting the information in the traces to a format that can be used to train an AI-based model.

At block 418, the example behavior extraction circuitry 112 trains an AI-based model 114 to identify behavior of traces based on the generated traces. As further described above in conjunction with FIGS. 1 and/or 3, the AI-based model 114 is an unsupervised model that is able to predict an event based on the events that occurred prior to the event. At block 420, the example surrogate model generation circuitry 116 generates a surrogate model based on the trained AI-based model, as further described below in conjunction with FIG. 5. At block 422, the example unit test automation circuitry 118 converts the surrogate model into code that can be used to test software in conjunction with the hard-base based platform using the surrogate model. As described above in conjunction with FIG. 1, the unit test automation circuitry 118 may convert the surrogate model into different kinds of code depending on the components that will be unit-tested.

At block 426, the example unit test automation circuitry 118 performs unit testing using the code corresponding to the surrogate model. At block 428, the example graphical model generation circuitry 120 generates a graphical representation of the surrogate model. An example of a graphical representation of the surrogate model is further described below in conjunction with FIG. 5. At block 428, the example user interface 122 displays the graphical representation of the surrogate model.

FIG. 5 is a flowchart representative of example machine readable instructions and/or example operations that may be executed and/or instantiated by processor circuitry (e.g., the surrogate model generation circuitry 116 of FIG. 3) to generate a surrogate model based on a trained AI-based model, in conjunction with block 420 of FIG. 4. The instructions begin at block 502 when the example model adjustment circuitry 306 initialize a surrogate model. As described above in conjunction with FIG. 3, the model adjustment circuitry 306 can initialize the surrogate model to accept a trace (e.g., categorize as valid) depending on the type of surrogate model used. For example, if the surrogate model is implemented as a deterministic finite automaton (DFA), the surrogate model will accept a trace that ends in an acceptor state. If the surrogate model is implemented as a push-down automata, the surrogate model will accept a trace that ends in an acceptor state or an empty stack.

At block 504, the example trace application circuitry 302 generates a trace (e.g., a random trace or a guided trace). At block 506, the example trace application circuitry 302 applies the generated trace as an input to the surrogate model and an AI-based model (e.g., obtained from the behavior extraction circuitry 112 via the component interface 300). At block 508, the example trace application circuitry 302 determines whether the generated trace is valid or invalid according to the AI-based model and/or the surrogate model. As described above in conjunction with FIG. 3, the trace application circuitry 302 uses the AI-based model to accept a trace (e.g., categorizes a trace as valid) if the AI-based model can predict the next event in the race to be "<END>" with at least a probability bigger than a predefined threshold T. Otherwise, the trace application circuitry 302 rejects the trace (e.g., categorizes as invalid). The surrogate model likewise determines whether an input trace is valid or not (e.g., the surrogate model may be initialized to determine that all traces are valid, all traces are invalided, and/or all traces are randomly valid and/or invalid). The surrogate model may accept a trace (e.g., categorize as valid) depending on the type of surrogate model used. For example, if the surrogate model is implemented as a deterministic finite automaton (DFA), the surrogate model will accept a trace that ends in an acceptor state. If the surrogate model is implemented as a push-down automata, the surrogate model will accept a trace that ends in an acceptor state or an empty stack.

At block 510, the example comparator 304 determines whether the validity according to the AI-based model matches the validity of the surrogate model. If the example comparator determines that the validity of the trace based on the AI-based model does not match the validity of the trace based on the surrogate model (block 510: NO), the example model adjustment circuitry 306 adjusts the surrogate model so that the validity corresponding to the surrogate model for the generated trace will match the validity corresponding to the AI-based model (block 512). At block 514, the example trace application circuitry 302 generates a subsequent trace and control returns to block 506 to process the subsequent trace.

If the example comparator determines that the validity of the trace based on the AI-based model matches the validity of the trace based on the surrogate model (block 510: YES), the example model adjustment circuitry 306 determines whether to continue training the surrogate model using a subsequent interaction (block 516). For example, the model adjustment circuitry 306 may determine whether to perform a subsequent iteration based on the number of iterations already performed, the number of matches during iterations, the number of counterexamples, the ratio of matches, the ratio of counterexamples, the number of iterations performed since the last counterexample was found, etc. The determination of when to continue training and/or when to stop training and output the surrogate model may be based on user and/or manufacturer preferences. If the example model adjustment circuitry 306 determines that training of the surrogate model should continue (block 516: YES), the example trace application circuitry 302 generates a subsequent trace (block 518), and control returns to block 506 to continue to train the surrogate model. If the example model adjustment circuitry 306 determines that training of the surrogate model should not continue (block 516: NO), control returns to block 422 of FIG. 4.

FIG. 6 illustrates example surrogate model information 600 corresponding to an example surrogate model, a corresponding example graphical representation 602 of the surrogate model, and an example transition table 604 corresponding to the surrogate model. Although FIG. 6 illustrates an example surrogate model corresponding to one particular trained AI-based model, other surrogate models can be generated with a different number of states, a different number of acceptor state(s), and/or a different number of input events corresponding to a different transition table and/or graphical model 602.

The example surrogate information 600 includes nine states (e.g., a start state, and states 1-8), an acceptor state (e.g., state 3), six input events (e.g., 1-6) and the transition table 604 corresponding to the states and input events. The example transition table 604 corresponds to the surrogate model that has been trained using a generalized representation from the behavior learned from an intermediate representation (e.g., the AI-based model that corresponds to valid traces of one or more components of a platform). The set of states and the input events of the surrogate information 600 describe the possible transitions from one state to another, when a specific input (e.g., a possible event) occurs. Among the states, there is an initial state (e.g., the start state) and one or more acceptor states (e.g., state '3' in FIG. 6) that can accept a sequence of inputs (e.g., all events in a valid trace). In the example transition table 604, the possible input events are shown that can be used to move across states. The transition table 604 represents the current state (e.g., represented in the rows) and given an input event (e.g., represented in the columns), and what the next state will be (e.g., by moving right across the transition table 604). For example, at state 1, if an input event of type 5 occurs, the resulting state will be state 7. In another example, at state start, if an input event of type 3 occurs, the resulting state will be state 2. Using the example transition table 604, generated input trace can be applied using the transition table to determine if the trace is valid (e.g. the trace ends at the acceptor state '3') or invalid (e.g., the trace does not end at the acceptor state). The example graphical representation 602 is one type of graphical representation of the example graphical model generation circuitry 120 may generate and display to a user via the user interface 122. The example graphical representation 602 includes the states of the transition tables 604 illustrated as circles, and the input event types of the transition table 604 illustrated as arrows. Alternatively, other graphical representations of the transition table 604 can be generated.

FIG. 7 is a block diagram of an example processor platform 700 structured to execute and/or instantiate the machine readable instructions and/or operations of FIGS. 4 and/or 5 to implement the compute device 100 of FIG. 1 and/or the surrogate model generation circuitry 116 of FIG. 2. The processor platform 700 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 700 of the illustrated example includes processor circuitry 712. The processor circuitry 712 of the illustrated example is hardware. For example, the processor circuitry 712 can be implemented by one or more integrated circuits, logic circuits, FPGAs microprocessors, CPUs, GPUs, DSPs, and/or microcontrollers from any desired family or manufacturer. The processor circuitry 712 may be implemented by one or more semiconductor based (e.g., silicon based) devices. In this example, the processor circuitry 712 implements the example interface 102, the example trace generation circuitry 104, the example trace acquisition circuitry 106, the example trace processing circuitry 108, the example filter 110, the example behavior extraction circuitry 112, the example AI-based model 114, the example surrogate model generation circuitry 116, the example unit test automation circuitry 118, the example graphical model generation circuitry 120, the example user interface 200, the example component interface 300, the example trace application circuitry 302, the example comparator 304, and the example model adjustment circuitry 306 of FIGS. 1-3.

The processor circuitry 712 of the illustrated example includes a local memory 713 (e.g., a cache, registers, etc.). The processor circuitry 712 of the illustrated example is in communication with a main memory including a volatile memory 714 and a non-volatile memory 716 by a bus 718. The volatile memory 714 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 716 may be implemented by flash memory and/or any other desired type of memory device. Access to the main memory 714, 716 of the illustrated example is controlled by a memory controller 717.

The processor platform 700 of the illustrated example also includes interface circuitry 720. The interface circuitry 720 may be implemented by hardware in accordance with any type of interface standard, such as an Ethernet interface, a universal serial bus (USB) interface, a Bluetooth^{®} interface, a near field communication (NFC) interface, a PCI interface, and/or a PCIe interface.

In the illustrated example, one or more input devices 722 are connected to the interface circuitry 720. The input device(s) 722 permit(s) a user to enter data and/or commands into the processor circuitry 712. The input device(s) 722 can be implemented by, for example, an audio sensor, a microphone, a camera (still or video), a keyboard, a button, a mouse, a touchscreen, a track-pad, a trackball, an isopoint device, and/or a voice recognition system.

One or more output devices 724 are also connected to the interface circuitry 720 of the illustrated example. The output devices 724 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 720 of the illustrated example, thus, typically includes a graphics driver card, a graphics driver chip, and/or graphics processor circuitry such as a GPU.

The interface circuitry 720 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 726. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 700 of the illustrated example also includes one or more mass storage devices 728 to store software and/or data. Examples of such mass storage devices 728 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 732, which may be implemented by the machine readable instructions of FIGS. 4 and/or 5, may be stored in the mass storage device 728, in the volatile memory 714, in the non-volatile memory 716, and/or on a removable non-transitory computer readable storage medium such as a CD or DVD

FIG. 8 is a block diagram of an example implementation of the processor circuitry 712 of FIG. 7. In this example, the processor circuitry 712 of FIG. 7 is implemented by a microprocessor 712. For example, the microprocessor 800 may implement multi-core hardware circuitry such as a CPU, a DSP, a GPU, an XPU, etc. Although it may include any number of example cores 802 (e.g., 1 core), the microprocessor 712 of this example is a multi-core semiconductor device including N cores. The cores 802 of the microprocessor 712 may operate independently or may cooperate to execute machine readable instructions. For example, machine code corresponding to a firmware program, an embedded software program, or a software program may be executed by one of the cores 802 or may be executed by multiple ones of the cores 802 at the same or different times. In some examples, the machine code corresponding to the firmware program, the embedded software program, or the software program is split into threads and executed in parallel by two or more of the cores 802. The software program may correspond to a portion or all of the machine readable instructions and/or operations represented by the flowchart of FIG. 4 and/or 5

The cores 802 may communicate by an example bus 804. In some examples, the bus 804 may implement a communication bus to effectuate communication associated with one(s) of the cores 802. For example, the bus 804 may implement at least one of an Inter-Integrated Circuit (I2C) bus, a Serial Peripheral Interface (SPI) bus, a PCI bus, or a PCIe bus. Additionally or alternatively, the bus 804 may implement any other type of computing or electrical bus. The cores 802 may obtain data, instructions, and/or signals from one or more external devices by example interface circuitry 806. The cores 802 may output data, instructions, and/or signals to the one or more external devices by the interface circuitry 806. Although the cores 802 of this example include example local memory 820 (e.g., Level 1 (LI) cache that may be split into an L1 data cache and an L1 instruction cache), the microprocessor 712 also includes example shared memory 810 that may be shared by the cores (e.g., Level 2 (L2_ cache)) for high-speed access to data and/or instructions. Data and/or instructions may be transferred (e.g., shared) by writing to and/or reading from the shared memory 810. The local memory 820 of each of the cores 802 and the shared memory 810 may be part of a hierarchy of storage devices including multiple levels of cache memory and the main memory (e.g., the main memory 714, 716 of FIG. 7). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 802 may be referred to as a CPU, DSP, GPU, etc., or any other type of hardware circuitry. Each core 802 includes control unit circuitry 814, arithmetic, and logic (AL) circuitry (sometimes referred to as an ALU) 816, a plurality of registers 818, the L1 cache 820, and an example bus 822. Other structures may be present. For example, each core 802 may include vector unit circuitry, single instruction multiple data (SIMD) unit circuitry, load/store unit (LSU) circuitry, branch/jump unit circuitry, floating-point unit (FPU) circuitry, etc. The control unit circuitry 814 includes semiconductor-based circuits structured to control (e.g., coordinate) data movement within the corresponding core 802. The AL circuitry 816 includes semiconductor-based circuits structured to perform one or more mathematic and/or logic operations on the data within the corresponding core 802. The AL circuitry 816 of some examples performs integer based operations. In other examples, the AL circuitry 816 also performs floating point operations. In yet other examples, the AL circuitry 816 may include first AL circuitry that performs integer based operations and second AL circuitry that performs floating point operations. In some examples, the AL circuitry 816 may be referred to as an Arithmetic Logic Unit (ALU). The registers 818 are semiconductor-based structures to store data and/or instructions such as results of one or more of the operations performed by the AL circuitry 816 of the corresponding core 802. For example, the registers 818 may include vector register(s), SIMD register(s), general purpose register(s), flag register(s), segment register(s), machine specific register(s), instruction pointer register(s), control register(s), debug register(s), memory management register(s), machine check register(s), etc. The registers 818 may be arranged in a bank as shown in FIG. 8. Alternatively, the registers 818 may be organized in any other arrangement, format, or structure including distributed throughout the core 802 to shorten access time. The bus 804 may implement at least one of an I2C bus, a SPI bus, a PCI bus, or a PCIe bus

Each core 802 and/or, more generally, the microprocessor 712 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 712 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 9 is a block diagram of another example implementation of the processor circuitry 712 of FIG. 7. In this example, the processor circuitry 712 is implemented by FPGA circuitry 712. The FPGA circuitry 712 can be used, for example, to perform operations that could otherwise be performed by the example microprocessor 712 of FIG. 8 executing corresponding machine readable instructions. However, once configured, the FPGA circuitry 712 instantiates the machine readable instructions in hardware and, thus, can often execute the operations faster than they could be performed by a general purpose microprocessor executing the corresponding software.

More specifically, in contrast to the microprocessor 712 of FIG. 8 described above (which is a general purpose device that may be programmed to execute some or all of the machine readable instructions represented by the flowchart of FIG. 4-5 but whose interconnections and logic circuitry are fixed once fabricated), the FPGA circuitry 712 of the example of FIG. 9 includes interconnections and logic circuitry that may be configured and/or interconnected in different ways after fabrication to instantiate, for example, some or all of the machine readable instructions represented by the flowchart of FIG. 4-5. In particular, the FPGA 712 may be thought of as an array of logic gates, interconnections, and switches. The switches can be programmed to change how the logic gates are interconnected by the interconnections, effectively forming one or more dedicated logic circuits (unless and until the FPGA circuitry 712 is reprogrammed). The configured logic circuits enable the logic gates to cooperate in different ways to perform different operations on data received by input circuitry. Those operations may correspond to some or all of the software represented by the flowchart of FIG. 4-5. As such, the FPGA circuitry 712 may be structured to effectively instantiate some or all of the machine readable instructions of the flowchart of FIG. 4-5 as dedicated logic circuits to perform the operations corresponding to those software instructions in a dedicated manner analogous to an ASIC. Therefore, the FPGA circuitry 712 may perform the operations corresponding to the some or all of the machine readable instructions of FIG. 9 faster than the general purpose microprocessor can execute the same.

In the example of FIG. 9, the FPGA circuitry 712 is structured to be programmed (and/or reprogrammed one or more times) by an end user by a hardware description language (HDL) such as Verilog. The FPGA circuitry 712 of FIG. 9, includes example input/output (I/O) circuitry 902 to obtain and/or output data to/from example configuration circuitry 904 and/or external hardware (e.g., external hardware circuitry) 906. For example, the configuration circuitry 904 may implement interface circuitry that may obtain machine readable instructions to configure the FPGA circuitry 712, or portion(s) thereof. In some such examples, the configuration circuitry 904 may obtain the machine readable instructions from a user, a machine (e.g., hardware circuitry (e.g., programmed, or dedicated circuitry) that may implement an Artificial Intelligence/Machine Learning (AI/ML) model to generate the instructions), etc. In some examples, the external hardware 906 may implement the microprocessor 712 of FIG. 8. The FPGA circuitry 712 also includes an array of example logic gate circuitry 908, a plurality of example configurable interconnections 910, and example storage circuitry 912. The logic gate circuitry 908 and interconnections 910 are configurable to instantiate one or more operations that may correspond to at least some of the machine readable instructions of FIG. 4-5 and/or other desired operations. The logic gate circuitry 908 shown in FIG. 9 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 908 to enable configuration of the electrical structures and/or the logic gates to form circuits to perform desired operations. The logic gate circuitry 908 may include other electrical structures such as look-up tables (LUTs), registers (e.g., flip-flops or latches), multiplexers, etc.

The interconnections 910 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 908 to program desired logic circuits.

The storage circuitry 912 of the illustrated example is structured to store result(s) of the one or more of the operations performed by corresponding logic gates. The storage circuitry 912 may be implemented by registers or the like. In the illustrated example, the storage circuitry 912 is distributed amongst the logic gate circuitry 908 to facilitate access and increase execution speed.

The example FPGA circuitry 712 of FIG. 9 also includes example Dedicated Operations Circuitry 914. In this example, the Dedicated Operations Circuitry 914 includes special purpose circuitry 916 that may be invoked to implement commonly used functions to avoid the need to program those functions in the field. Examples of such special purpose circuitry 916 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 712 may also include example general purpose programmable circuitry 918 such as an example CPU 920 and/or an example DSP 922. Other general purpose programmable circuitry 918 may additionally or alternatively be present such as a GPU, an XPU, etc., that can be programmed to perform other operations.

Although FIGS. 8 and 9 illustrate two example implementations of the processor circuitry 712 of FIG. 7, many other approaches are contemplated. For example, as mentioned above, modern FPGA circuitry may include an on-board CPU, such as one or more of the example CPU 920 of FIG. 9. Therefore, the processor circuitry 712 of FIG. 7 may additionally be implemented by combining the example microprocessor 712 of FIG. 8 and the example FPGA circuitry 712 of FIG. 9. In some such hybrid examples, a first portion of the machine readable instructions represented by the flowchart of FIG. 4-5 may be executed by one or more of the cores 802 of FIG. 8 and a second portion of the machine readable instructions represented by the flowchart of FIG. 4-5 may be executed by the FPGA circuitry 712 of FIG. 9.

In some examples, the processor circuitry 712 of FIG. 7 may be in one or more packages. For example, the processor circuitry 712 of FIG. 8 and/or the FPGA circuitry 712 of FIG. 9 may be in one or more packages. In some examples, an XPU may be implemented by the processor circuitry 712 of FIG. 7, which may be in one or more packages. For example, the XPU may include a CPU in one package, a DSP in another package, a GPU in yet another package, and an FPGA in still yet another package.

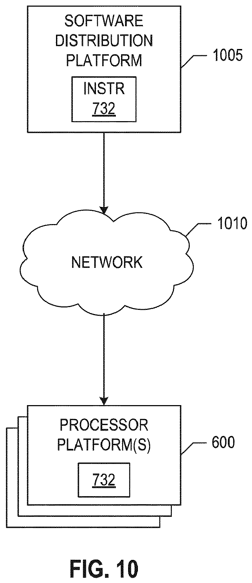

A block diagram illustrating an example software distribution platform 1005 to distribute software such as the example machine readable instructions 732 of FIG. 7 to hardware devices owned and/or operated by third parties is illustrated in FIG. 10. The example software distribution platform 1005 may be implemented by any computer server, data facility, cloud service, etc., capable of storing and transmitting software to other computing devices. The third parties may be customers of the entity owning and/or operating the software distribution platform 1005. For example, the entity that owns and/or operates the software distribution platform 1005 may be a developer, a seller, and/or a licensor of software such as the example machine readable instructions 732 of FIG. 7. The third parties may be consumers, users, retailers, OEMs, etc., who purchase and/or license the software for use and/or re-sale and/or sub-licensing. In the illustrated example, the software distribution platform 1005 includes one or more servers and one or more storage devices. The storage devices store the machine readable instructions 732, which may correspond to the example machine readable instructions 400, 500 of FIGS. 4 and/or 5, as described above. The one or more servers of the example software distribution platform 1005 are in communication with a network 1010, which may correspond to any one or more of the Internet and/or any example network. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 732 from the software distribution platform 1005. For example, the software, which may correspond to the example machine readable instructions 400, 500 of FIG. 4-5, may be downloaded to the example processor platform 700, which is to execute the machine readable instructions 732 to implement the surrogate model generation circuitry 116. In some example, one or more servers of the software distribution platform 1005 periodically offer, transmit, and/or force updates to the software (e.g., the example machine readable instructions 732 of FIG. 7) to ensure improvements, patches, updates, etc., are distributed and applied to the software at the end user devices.

Example methods, apparatus, systems, and articles of manufacture to improve data quality for artificial intelligence are disclosed herein. Further examples and combinations thereof include the following: Example 1 includes an apparatus to generate a surrogate model for testing software on hardware, the apparatus comprising an interface, instructions, and processor circuitry to execute the instructions to generate sequences of events for a platform corresponding to hardware, train an artificial intelligence (AI)-based model using the sequences of events, generate a surrogate model based on the trained AI-based model, and perform unit testing using the surrogate model.

Example 2 includes the apparatus of example 1, wherein the sequence of events are valid traces that can occur on the platform.

Example 3 includes the apparatus of example 1, wherein the processor circuitry is to determine a section of interest of the platform, the sequences of events corresponding to the section of the platform.

Example 4 includes the apparatus of example 1, wherein the processor circuitry it to filter out at least one of irrelevant information or concurrent operations from the sequences of events prior to training the AI-based model.

Example 5 includes the apparatus of example 1, wherein the AI-based model is an unsupervised model that predicts a subsequent event based on one or more previous events based on the sequences of events.

Example 6 includes the apparatus of example 1, wherein the processor circuitry is to generate the surrogate model by initializing the surrogate model, generating a sequence of events, applying the sequence of events to the surrogate model and to the AI-based model, determining a first validity of the sequence of events based on the surrogate model, determining a second validity of the sequence of events based on the AI-based model, and adjusting the surrogate model to when the first validity is different than the second validity.

Example 7 includes the apparatus of example 6, wherein the processor circuitry is to adjust the surrogate model to ensure that the first validity based on the surrogate model will match the second validity during a subsequent comparison.

Example 8 includes the apparatus of example 1, wherein the processor circuitry is to generate a graphical representation of the surrogate model.

Example 9 includes the apparatus of example 8, wherein the processor circuitry is to display the graphical representation using a user interface.

Example 10 includes a non-transitory computer readable medium comprising instructions which, when executed, cause one or more processors to at least generate sequences of events for a platform corresponding to hardware, train an artificial intelligence (AI)-based model using the sequences of events, generate a surrogate model based on the trained AI-based model, and perform unit testing using the surrogate model.

Example 11 includes the non-transitory computer readable medium of example 10, wherein the sequence of events are valid traces that can occur on the platform.

Example 12 includes the non-transitory computer readable medium of example 10, wherein the instructions cause the one or more processors to determine a section of interest of the platform, the sequences of events corresponding to the section of the platform.

Example 13 includes the non-transitory computer readable medium of example 10, wherein the instructions cause the one or more processors to filter out at least one of irrelevant information or concurrent operations from the sequences of events prior to training the AI-based model.

Example 14 includes the non-transitory computer readable medium of example 10, wherein the AI-based model is an unsupervised model that predicts a subsequent event based on one or more previous events based on the sequences of events.

Example 15 includes the non-transitory computer readable medium of example 10, wherein the instructions cause the one or more processors to generate the surrogate model by initializing the surrogate model, generating a sequence of events, applying the sequence of events to the surrogate model and to the AI-based model, determining a first validity of the sequence of events based on the surrogate model, determining a second validity of the sequence of events based on the AI-based model, and adjusting the surrogate model to when the first validity is different than the second validity.

Example 16 includes the non-transitory computer readable medium of example 15, wherein the instructions cause the one or more processors to adjust the surrogate model to ensure that the first validity based on the surrogate model will match the second validity during a subsequent comparison.

Example 17 includes the non-transitory computer readable medium of example 10, wherein the instructions cause the one or more processors to generate a graphical representation of the surrogate model.

Example 18 includes the non-transitory computer readable medium of example 17, wherein the instructions cause the one or more processors to display the graphical representation using a user interface.

Example 19 includes an apparatus to generate a surrogate model for testing software on hardware, the apparatus comprising interface circuitry, and processor circuitry including one or more of at least one of a central processing unit, a graphic processing unit or a digital signal processor, the at least one of the central processing unit, the graphic processing unit or the digital signal processor having control circuitry, one or more registers, and arithmetic and logic circuitry to perform one or more first operations corresponding to instructions in the apparatus, and, a Field Programmable Gate Array (FPGA), the FPGA including logic gate circuitry, a plurality of configurable interconnections, and storage circuitry, the logic gate circuitry and interconnections to perform one or more second operations, or Application Specific Integrate Circuitry (ASIC) including logic gate circuitry to perform one or more third operations, the processor circuitry to perform at least one of the first operations, the second operations or the third operations to instantiate trace generation circuitry to generate sequences of events for a platform, behavior extraction circuitry to train an artificial intelligence (AI)-based model using the sequences of events, surrogate model generation circuitry to generate a surrogate model based on the trained AI-based model, and unit test automation circuitry to perform unit testing using the surrogate model.

Example 20 includes the apparatus of example 19, wherein the sequence of events are valid traces that can occur on the platform.

Example 21 includes the apparatus of example 19, further including trace acquisition circuitry to determine a section of interest the platform, the sequences of events corresponding to the section of the platform.

Example 22 includes the apparatus of example 19, further including a filter to filter out at least one of irrelevant information or concurrent operations from the sequences of events prior to training the AI-based model.

Example 23 includes the apparatus of example 19, wherein the AI-based model is an unsupervised model that predicts a subsequent event based on one or more previous events based on the sequences of events.

Example 24 includes the apparatus of example 19, wherein to generate the surrogate model the surrogate model generation circuitry is to initialize the surrogate model, generate a sequence of events, apply the sequence of events to the surrogate model and to the AI-based model, determine a first validity of the sequence of events based on the surrogate model, determine a second validity of the sequence of events based on the AI-based model, and adjust the surrogate model to when the first validity is different than the second validity.

Example 25 includes the apparatus of example 24, wherein the surrogate model generation circuitry is to adjust the surrogate model to ensure that the first validity based on the surrogate model will match the second validity during a subsequent comparison.

Example 26 includes the apparatus of example 19, further including graphical model generation circuitry to generate a graphical representation of the surrogate model.

Example 27 includes the apparatus of example 26, further including a user interface to display the graphical representation.

Example 28 includes an apparatus to generate a surrogate model for testing software on hardware, the apparatus comprising means for generating sequences of events for a platform, means for training an artificial intelligence (AI)-based model using the sequences of events, means for generating a surrogate model based on the trained AI-based model, and means for performing unit testing using the surrogate model.

Example 29 includes the apparatus of example 28, wherein a valid trace corresponds to a sequence of events that can occur on the platform.

Example 30 includes the apparatus of example 28, further including means for determining a section of the platform of interest, the sequences of events corresponding to the section of the platform.

Example 31 includes the apparatus of example 28, further including means for filtering out at least one of irrelevant information or concurrent operations from the sequences of events prior to training the AI-based model.

Example 32 includes the apparatus of example 28, wherein the AI-based model is an unsupervised model that predicts a subsequent event based on one or more previous events based on the sequences of events.

Example 33 includes the apparatus of example 28, wherein to generate the surrogate model the means for generating the surrogate model is to initialize the surrogate model, generate a sequence of events, apply the sequence of events to the surrogate model and to the AI-based model, determine a first validity of the sequence of events based on the surrogate model, determine a second validity of the sequence of events based on the AI-based model, and adjust the surrogate model to when the first validity is different than the second validity.

Example 34 includes the apparatus of example 33, wherein the means for generating the surrogate model is to adjust the surrogate model to ensure that the first validity based on the surrogate model will match the second validity during a subsequent comparison.

Example 35 includes the apparatus of example 28, further including means for generating a graphical representation of the surrogate model.

Example 36 includes the apparatus of example 35, further including means for displaying the graphical representation.

Example 37 includes a method to generate a surrogate model for testing software on hardware, the method comprising generating, by executing an instruction with one or more processors, sequences of events for a platform, training, by executing an instruction with the one or more processors, an artificial intelligence (AI)-based model using the sequences of events, generating, by executing an instruction with the one or more processors, a surrogate model based on the trained AI-based model, and performing, by executing an instruction with the one or more processors, unit testing using the surrogate model.

Example 38 includes the method of example 37, wherein the sequence of events are valid traces that can occur on the platform.

Example 39 includes the method of example 37, further including determining a section of interest the platform, the sequences of events corresponding to the section of the platform.

Example 40 includes the method of example 37, further including filtering out at least one of irrelevant information or concurrent operations from the sequences of events prior to training the AI-based model.

Example 41 includes the method of example 37, wherein the AI-based model is an unsupervised model that predicts a subsequent event based on one or more previous events based on the sequences of events.

Example 42 includes the method of example 37, wherein the generating of the surrogate model includes initializing the surrogate model, generating a sequence of events, applying the sequence of events to the surrogate model and to the AI-based model, determining a first validity of the sequence of events based on the surrogate model, determining a second validity of the sequence of events based on the AI-based model, and adjusting the surrogate model to when the first validity is different than the second validity.

Example 43 includes the method of example 42, wherein the adjusting of the surrogate model ensures that the first validity based on the surrogate model will match the second validity during a subsequent comparison.

Example 44 includes the method of example 37, further including generating a graphical representation of the surrogate model.

Example 45 includes the method of example 44, further including displaying the graphical representation.

From the foregoing, it will be appreciated that example systems, methods, apparatus, and articles of manufacture have been disclosed that generate a surrogate model based on traces from a computing unit. Examples disclosed herein replace test harnesses with a surrogate model that leverages real platforms and/or virtual platforms developed by a platform simulator. Such surrogate models can be implemented for unit testing. A surrogate model (e.g., also referred to as a metamodel, an emulator, etc.) is an analytical model that mimics the input/output behavior of a complex system. In some examples, techniques (e.g., concolic testing, fuzzing, etc.) can be applied to the disclosed surrogate models trained under varying system configuration and/or execution scenarios to maximize and/or improve unit-testing coverage, discover edge cases that are not possible to detect with conventional techniques, etc. Additionally, surrogate models provide explainability (e.g., a virtual representation) of the hardware platform. In this manner, developers can use the virtual representation of the surrogate model to debug issues with BIOS, firmware, driver component, the platform simulator itself, etc. Accordingly, examples disclosed herein improve software quality via increased coverage, elimination of redundant work, and reduction of product turn-around-time by enabling early debug discovery. Disclosed systems, methods, apparatus, and articles of manufacture are accordingly directed to one or more improvement(s) in the operation of a machine such as a computer or other electronic and/or mechanical device.

Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus to generate a surrogate model for testing software on hardware, the apparatus comprising:
an interface;
instructions; and
processor circuitry to execute the instructions to:
generate sequences of events for a platform corresponding to hardware;
train an artificial intelligence (AI)-based model using the sequences of events;
generate a surrogate model based on the trained AI-based model; and
perform unit testing using the surrogate model.

2. The apparatus of claim 1, wherein the sequence of events are valid traces that can occur on the platform.

3. The apparatus of any one of claims 1-2, wherein the processor circuitry is to determine a section of interest of the platform, the sequences of events corresponding to the section of the platform.

4. The apparatus of any one of claims 1-3, wherein the processor circuitry it to filter out at least one of irrelevant information or concurrent operations from the sequences of events prior to training the AI-based model.

5. A method to generate a surrogate model for testing software on hardware, the method comprising:
generating, by executing an instruction with one or more processors, sequences of events for a platform;
training, by executing an instruction with the one or more processors, an artificial intelligence (AI)-based model using the sequences of events;
generating, by executing an instruction with the one or more processors, a surrogate model based on the trained AI-based model; and
performing, by executing an instruction with the one or more processors, unit testing using the surrogate model.

6. The method of claim 5, wherein the sequence of events are valid traces that can occur on the platform.

7. The method of and one of claims 5-6, further including determining a section of interest the platform, the sequences of events corresponding to the section of the platform.

8. The method of and one of claims 5-7, further including filtering out at least one of irrelevant information or concurrent operations from the sequences of events prior to training the AI-based model.

9. The method of and one of claims 5-8, wherein the AI-based model is an unsupervised model that predicts a subsequent event based on one or more previous events based on the sequences of events.

10. The method of and one of claims 5-9, wherein the generating of the surrogate model includes:
initializing the surrogate model;
generating a sequence of events;
applying the sequence of events to the surrogate model and to the AI-based model;
determining a first validity of the sequence of events based on the surrogate model;
determining a second validity of the sequence of events based on the AI-based model; and
adjusting the surrogate model to when the first validity is different than the second validity.

11. The method of claim 10, wherein the adjusting of the surrogate model ensures that the first validity based on the surrogate model will match the second validity during a subsequent comparison.

12. The method of and one of claims 5-11, further including generating a graphical representation of the surrogate model.

13. The method of claim 12, further including displaying the graphical representation.

14. A computer readable medium comprising instructions which, when executed, cause one or more processors to implement the method as claimed in claim 5-13.

15. An apparatus comprising means to perform a method as claimed in claims 5-13.
